(19) Europäisches Patentamt
European Patent Office
Office européen des brevets

(11) **EP 1 055 144 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(51) Int Cl.:
***G02B 21/00*** *(2006.01)*

(21) Anmeldenummer: **99915483.4**

(22) Anmeldetag: **19.02.1999**

(86) Internationale Anmeldenummer:
**PCT/DE1999/000459**

(87) Internationale Veröffentlichungsnummer:
**WO 1999/042884 (26.08.1999 Gazette 1999/34)**

(54) **OPTISCHE ANORDNUNG MIT SPEKTRAL SELEKTIVEM ELEMENT**

OPTICAL ARRANGEMENT WITH A SPECTRALLY SELECTIVE ELEMENT

SYSTEME OPTIQUE A ELEMENT SPECTROSELECTIF

(84) Benannte Vertragsstaaten:
**CH DE FR GB LI**

(30) Priorität: **19.02.1998 DE 19806867**

(43) Veröffentlichungstag der Anmeldung:
**29.11.2000 Patentblatt 2000/48**

(73) Patentinhaber: **Leica Microsystems CMS GmbH**
**35578 Wetzlar (DE)**

(72) Erfinder:
• **ENGELHARDT, Johann**
**D-76669 Bad Schönborn (DE)**
• **BRADL, Joachim**
**D-69198 Schriesheim (DE)**
• **ULRICH, Heinrich**
**D-69121 Heidelberg (DE)**

(74) Vertreter: **Hoffmann, Jürgen et al**
**GH-Patent**
**Patentanwaltskanzlei**
**Bahnhofstrasse 2**
**65307 Bad Schwalbach (DE)**

(56) Entgegenhaltungen:
**EP-A- 0 732 582      WO-A-88/08550**
**WO-A-92/01966      WO-A-92/18850**
**DE-A- 19 627 568     US-A- 5 418 371**
**US-A- 5 672 880**

**Beschreibung**

Die Erfindung betrifft ein konfokales Laser-Scanning-Mikroskop mit einer optischen Anordnung, die im Strahlengang einer zur Fluoreszenzanregung geeigneten Lichtquelle und im Strahlengang des konfokalen Laser-Scanning-Mikroskops angeordnet ist, wobei die optische Anordnung mindestens ein spektral selektives Element zum Einkoppeln des Anregungslichts mindestens einer Lichtquelle in das Mikroskop und zum Ausblenden des am Objekt gestreuten und reflektierten Anregungslichts bzw. der Anregungswellenlänge aus dem über den Detektionsstrahlengang vom Objekt kommenden Licht aufweist.

Sowohl bei der konventionellen wie auch bei der konfokalen Laser-Scanning-Mikroskopie werden in den Strahlengang einer für Fluoreszenzanregung geeigneten Lichtquelle Farbstrahlteiler mit einer ganz besonderen Transmissions- und Reflexionscharakteristik verwendet. Dabei handelt es sich ganz überwiegend um dichroitische Strahlteiler. Mit einem solchen Element wird die Fluoreszenzanregungswellenlänge $\lambda_{ill1}$ (bzw. $\lambda_{ill2}$, $\lambda_{ill3}$ ..., $\lambda_{illn}$ bei der Verwendung von mehreren Lasern) in den Beleuchtungsstrahlengang reflektiert, um die Fluoreszenzverteilung im Objekt anzuregen und dann zusammen mit dem am Objekt gestreuten und reflektierten Anregungslicht den Strahlengang bis hin zum Farbstrahlteiler zu durchlaufen. Das Anregungslicht mit den Wellenlängen $\lambda_{ill1}$, $\lambda_{ill2}$, $\lambda_{ill3}$, ...., $\lambda_{illn}$ wird am Farbstrahlteiler zurück in den Laser reflektiert, nämlich aus dem Detektionsstrahlengang heraus. Das Fluoreszenzlicht mit den Wellenlängen $\lambda_{fluo1}$, $\lambda_{fluo2}$, $\lambda_{fluo3}$, ...., $\lambda_{fluon}$ passiert den Farbstrahlteiler und wird - gegebenenfalls nach weiterer spektraler Aufteilung-detektiert.

Farbstrahlteiler sind üblicherweise durch ein Interferenzfilter realisiert und werden je nach den verwendeten Wellenlängen für die Anregung bzw. für die Detektion gezielt bedampft. An dieser Stelle sei angemerkt, daß gemäß voranstehender Beschreibung des Standes der Technik unter einem Dichroit ein Wellenlängen-separierbares Element verstanden wird, welches das Licht unterschiedlicher Wellenlänge aufgrund der Wellenlänge und nicht aufgrund der Polarisation trennt.

In der Praxis ist die Verwendung von Farbstrahlteilern zunächst einmal insoweit nachteilig, als es sich hierbei um in der Herstellung aufwendige und daher teure optische Bausteine handelt. Des weiteren ist nachteilig, daß Farbstrahlteiler eine feste Wellenlängencharakteristik aufweisen und daher nicht mit beliebiger Flexibilität hinsichtlich der Wellenlänge des Anregungslichts verwendet werden können. Bei einem Wechsel der Wellenlänge des Anregungslichts müssen auch die Farbstrahlteiler ausgewechselt werden, so beispielsweise bei einer Anordnung mehrerer Farbstrahlteiler in einem Filterrad. Dies ist abermals aufwendig und daher teuer und erfordert im übrigen eine ganz besondere Justage der einzelnen Farbstrahlteiler.

Die Verwendung eines Farbstrahlteilers bringt den weiteren Nachteil mit sich, daß durch Reflexion bedingte Lichtverluste auftreten, insbesondere Lichtverluste von Fluoreszenzlicht, welches gerade detektiert werden soll. Der spektrale Transmissions-/Reflexionsbereich ist bei Farbstrahlteilern recht breit ($\lambda_{ill} \pm 20$ nm) und keineswegs ideal "steil". Folglich läßt sich das Fluoreszenzlicht aus diesem spektralen Bereich nicht ideal detektieren.

Bei Verwendung von Farbstrahlteilern ist die Anzahl der gleichzeitig einkoppelbaren Laser begrenzt, nämlich beispielsweise auf die Anzahl der in einem Filterrad angeordneten und kombinierbaren Farbstrahlteiler. Üblicherweise werden maximal drei Laser in den Strahlengang eingekoppelt. Wie bereits zuvor ausgeführt, müssen sämtliche Farbstrahlteiler, also auch die in einem Filterrad angeordneten Farbstrahlteiler, exakt justiert werden, was einen ganz erheblichen Aufwand in der Handhabung mit sich bringt. Alternativ können geeignete Neutralstrahlteiler eingesetzt werden, die das Fluoreszenzlicht gemeinsam mit dem am Objekt gestreuten/reflektierten Anregungslicht effizient zum Detektor leiten. Die Verluste bei der Lasereinkopplung sind dabei jedoch erheblich.

Zur Dokumentation des Standes der Technik wird lediglich beispielhaft auf die DE 196 27 568 A1 verwiesen, die eine optische Anordnung zur konfokalen Mikroskopie zeigt. Dabei handelt es sich im Konkreten um eine Anordnung zur zeitgleichen konfokalen Beleuchtung einer Objektebene mit einer Vielzahl geeignet divergierender Leuchtpunkte sowie zugehörigen Abbildungsgliedern und einer Vielzahl von Pinholes zur konfokalen kontrastreichen Abbildung in einem Beobachtungsgerät, wobei es sich dabei um ein Mikroskop handeln kann. Die Einkopplung mehrerer Lichtquellen erfolgt dort über ein diffraktives Element. Mehrere optische Teilerelemente bzw. Farbstrahlteiler sind im Detektionsstrahlengang angeordnet, wodurch sich ein ganz erheblicher apparativer Aufwand ergibt.

Hinsichtlich der Verwendung aktiver optischer Elemente im Strahlengang eines Laser-Scanning-Mikroskops wird ergänzend auf die US 4,827,125 und die US 5,410,371 verwiesen, wobei diese Druckschriften die grundsätzliche Verwendung eines AOD (Acousto-Optical-Deflector) und eines AOTF (Acousto-Optical-Tunable-Filter) zeigen, und zwar stets mit dem Zweck, einen Strahl abzulenken oder abzuschwächen.

Aus US 5,599,717 ist ein Lumineszenz-System zum Untersuchen von Hautgewebe bekannt. Dieses System dient dazu, das Gewebe chemisch zu analysieren, wobei kein Abbild des Gewebes erzeugt wird. Dies geschieht dadurch, dass die zu untersuchende Probe zunächst für einen bestimmten Zeitraum mit Anregungslicht beleuchtet wird und anschließend bei abgeschalteter Beleuchtung das von der Probe ausgehende Lumineszenzlicht, das eine andere Wellenlänge als das Anregungslichts aufweist, detektiert wird. Anregung und Detektion wechseln sich zeitlich ab.

Aus DE 43 30 347 A1 ist ein Spektraldetektor bekannt, der auch in einem konfokalen Fluoreszenzmikroskop verwendet werden kann. Zur Einkopplung von Beleuchtungslicht dient ein Strahlteiler.

Aus US 5,127,730 ist ein konfokales Mehrfarb-Laser-Scanning-Mikroskop bekannt. Zum Einkoppeln des Beleuchtungslichts dient ein Farbstrahlteiler.

Der vorliegenden Erfindung liegt nun die Aufgabe zugrunde, ein konfokales Laser-Scanning-Mikroskop, derart auszugestalten und weiterzubilden, daß das Einkoppeln des Anregungslichts unterschiedlicher Anregungswellenlängen möglich ist, ohne bei einem Wechsel der Wellenlänge des Anregungslichts einen Wechsel oder eine besondere Justage der dort verwendeten optischen Elemente vornehmen zu müssen. Des Weiteren soll die Anzahl der erforderlichen optischen Elemente weitestmöglich reduziert sein. Schließlich soll eine ideale Detektion des Fluoreszenzlichts möglich sein.

Diese Aufgaben werden durch die Merkmale der vorliegenden Patentansprüche gelöst.

In der vorliegenden Erfindung ist das spektral selektive Element auf die Auszubildenden der Anregungswellenlänge einstellbar. Bei einer besonderen Ausführungsform ist zusätzlich vorgesehen, daß durch das spektral selektive Element Anregungslicht unterschiedlicher Wellenlängen ausblendbar sowie entsprechend einkoppelbar ist.

Erfindungsgemäß ist erkannt worden, daß man im Strahlengang eines konfokalen Laser-Scanning-Mikroskops, den dort bislang verwendeten Farbstrahlteiler durch ein aktives spektral selektives Element ersetzen kann, nämlich durch ein spektral selektives Element, welches geeignet ist, Anregungslicht unterschiedlicher Wellenlängen auszublenden oder einzublenden bzw. einzukoppeln. Dieses spektral selektive Element dient einerseits zum Einkoppeln des Anregungslichts mindestens einer Lichtquelle in das Mikroskop und andererseits zum Ausblenden des am Objekt gestreuten und reflektierten Anregungslichts bzw. der entsprechenden Anregungswellenlänge aus dem über den Detektionsstrahlengang vom Objekt kommenden Licht. Insoweit kommt dem spektral selektiven Element eine Doppelfunktion zu, wobei beide Funktionen quasi zwangsgekoppelt sind.

Erfindungsgemäß ist das spektral selektive Element auf die jeweils einzublendende oder auszublendende Anregungswellenlänge einstellbar. Auch insoweit ist aufgrund der voranstehend geschilderten Doppelfunktion eine Zwangskopplung auf einfache Weise gewährleistet, nämlich dadurch, daß mit Hilfe des spektral selektiven Elements das Anregungslicht in den Beleuchtungsstrahlengang einkoppelbar und daß exakt die Wellenlänge des Anregungslichts, nämlich die Anregungswellenlänge, aufgrund der hier vorgesehenen Einstellbarkeit aus dem über den Detektionsstrahlengang vom Objekt kommenden Licht ausblendbar ist, so daß zur Detektion das vom Objekt kommende Detektionslicht (=Fluoreszenzlicht) verbleibt.

In einem Beispiel, das nicht zu der Erfindung gehört, kann es sich bei dem spektral selektiven Element - zur Begünstigung der voranstehend erörterten Doppelfunktion - um ein passives Element bzw. Bauteil handeln. Dazu könnte das spektral selektive Element als transparentes optisches Gitter oder als holographisches Element ausgeführt sein. Ebenso ist es denkbar, das spektral selektive Element als passiven AOD (Acousto-Optical-Deflecor) oder als passiven AOTF (Acousto-Optical-Tunable-Filter) auszuführen.

Erfindungsgemäß handelt es sich bei dem spektral selektiven Element um ein aktives Bauteil, so bspw. um ein akustooptisch und/oder elektrooptisch arbeitendes Element. Im Konkreten kommt hier als spektral selektives Element ein AOD (Acousto-Optical-Deflector) oder ein AOTF (Acousto-Optical-Tunable-Filter) in Frage.

Anstelle des im Stand der Technik üblichen Farbstrahlteilers wird hier ein aktives spektral selektives Element verwendet, so beispielsweise ein AOD oder ein AOTF. Die Aufgabe dieser aktiven Bauteile besteht darin, das Anregungslicht der Lichtquelle bzw. des Lasers oder der Laser $\lambda_{ill1}$, $\lambda_{ill2}$ $\lambda_{ill3}$ ,...., $\lambda_{illn}$ in den Beleuchtungsstrahlengang und somit in das Mikroskop einzukoppeln, um danach per Beam-Scanning die Fluoreszenzverteilung im Objekt anzuregen. Bei der Detektion kann das vom Objekt kommende Fluoreszenzlicht nahezu ungestört das aktive spektral selektive Element passieren. Dabei wird das vom Objekt gestreute oder reflektierte Licht mit den Anregungswellenlängen der Lichtquelle bzw. des Lasers oder der Laser aus dem Detektionsstrahlengang weitgehend herausreflektiert.

Zur Einkopplung einer Lichtquelle bzw. eines Lasers oder mehrerer Laser mit verschiedenen Wellenlängen $\lambda_{ill1}$, $\lambda_{ill2}$,..., $\lambda_{illn}$ kann ein AOD mit entsprechenden Frequenzen $\nu_1$, $\nu_2$ ,..., $\nu_n$ vorzugsweise simultan beschaltet werden, so daß die verschiedenen Laserstrahlen nach dem Durchgang durch den AOD koaxial mit der optischen Achse verlaufen. Hinsichtlich der Verwendung des AOD ist wesentlich, daß dort eine Frequenz $\nu_n$ eine Wellenlänge $\lambda_{illn}$, selektiert, die aus dem eigentlichen Strahlengang abgelenkt wird. Der Ablenkungswinkel $\phi$ ist dabei durch die Formel

$$\phi = \lambda_{illn}\, \nu_n\, /\, 2f$$

definiert, wobei f die Ausbreitungsgeschwindigkeit der Schallwelle im AOD ist. Das zu detektierende Fluoreszenzlicht mit einer spektralen Verteilung um die Wellenlängen $\lambda_{fluo1}$, $\lambda_{fluo2}$ ,...., $\lambda_{fuon}$ zusammen mit dem am Objekt gestreuten bzw. reflektierten Anregungslicht mit den Wellenlängen $\lambda_{ill1}$, $\lambda_{ill2}$ ,..., $\lambda_{illn}$ durchläuft nun den AOD in umgekehrter Richtung. Jedoch wird gemäß der Umkehrbarkeit des Lichtwegs das Anregungslicht mit den Wellenlängen $\lambda_{ill1}$, $\lambda_{ill2}$ ,..., $\lambda_{illn}$ wegen der spezifischen Einstellung des AOD aus dem Detektionsstrahlengang in Richtung des Lasers abgelenkt (1. Ordnung). Somit kann das "spektral verbleibende" Fluoreszenzlicht um

die Wellenlängen $\lambda_{fluo1}$, $\lambda_{fluo2}$ ,..., $\lambda_{fluon}$ - verglichen mit einem herkömmlichen Farbstrahlteiler - auf verbesserte Weise detektiert werden (0. Ordnung). Dadurch läßt sich jedenfalls die Justage der Einkopplung unterschiedlicher Laser einfacher als im Stand der Technik (dort unter Anwendung herkömmlicher Farbstrahlteiler in einem Filterrad) vornehmen.

In weiter vorteilhafter Weise könnte ein Nachschalten weiterer AOTF die einzelnen Wellenlängen in ihrer Leistung nach der Strahlzusammenführung selektiv regeln.

Zur Einkopplung einer Laserlichtquelle mit verschiedenen Wellenlängen $\lambda_{fill1}$, $\lambda_{fill2}$ ,..., $\lambda_{filln}$ kann ein AOTF mit entsprechenden Frequenzen $\nu_1$, $\nu_2$,..., $\nu_n$ simultan geschaltet sein, so daß die verschiedenen Wellenlängen in ihrer Anregungsleistung variieren und auf die Anwendung hin optimierbar sind. Die Zuführung des Laserlichts kann mittels Lichtleitfaser erfolgen.

Jedenfalls wird die Lichtquelle bzw. der Laser koaxial aus der Richtung der 1. Ordnung des Kristalls eingekoppelt. Das zu detektierende Fluoreszenzlicht mit einer spektralen Verteilung um die Wellenlängen $\lambda_{fluo1}$, $\lambda_{fluo2}$ ,..., $\lambda_{fluon}$ gemeinsam mit dem am Objekt gestreuten bzw. reflektierten Anregungslicht mit den Wellenlängen $\lambda_{fill1}$, $\lambda_{fill2}$,..., $\lambda_{filln}$ durchlaufen nun den AOTF In umgekehrte Richtung. Gemäß der Umkehrbarkeit des Lichtwegs wird das Anregungslicht mit den Wellenlängen $\lambda_{fill1}$, $\lambda_{fill2}$,..., $\lambda_{filln}$ wegen der spezifischen Einstellung des OTF aus dem Detektionsstrahlengang in Richtung der Lichtquelle bzw. des Lasers abgelenkt. Somit kann auch hierbei das "spektral verbleibende" Fluoreszenzlicht um die Wellenlängen $\lambda_{fluo1}$, $\lambda_{fluo2}$ ,..., $\lambda_{fluon}$ in einer - verglichen zum herkömmlichen Farbstrahlteiler - verbesserten Weise detektiert werden (0. Ordnung).

Sowohl unter Verwendung eines AOD oder AOTF als auch unter Verwendung eines transparenten Gitters wird sich das Fluoreszenzlicht nach dem Durchgang durch das jeweilige aktive Element aufgrund der auftretenden Dispersion spektral auffächern. Insoweit ist es von Vorteil, ein oder mehrere entsprechende "inverse" Elemente nachzuschalten, so daß die ungewünschte spektrale Auffächerung wieder rückgängig gemacht wird. Auch ist es denkbar, weitere optische Elemente zur Fokussierung oder zum Ausblenden unerwünschter Strahlanteile dem jeweiligen Element (AOD, AOTF oder transparentes Gitter) vor- bzw. nachzuschalten. Der dadurch wiedervereinigte Detektionsstrahl kann dann in herkömmlicher Weise durch nachgeschaltete Farbstrahlteiler spektral zerlegt und auf die verschiedenen Detektoren abgebildet werden.

Grundsätzlich ist eine Anordnung im Sinne eines "Multibanddetektor" denkbar. Hierzu wird auf die Patentanmeldung DE 43 30 347.1-42 verwiesen.

Zwischen der Scan-Einheit und dem AOD bzw. dem transparenten Gitter (bei mehreren Lichtquellen bzw. Lasern mehrerer Wellenlängen) bzw. dem AOTF (bei einer Lichtquelle bzw. einem Laser mit verschiedenen Wellenlängen) ist das Anregungs-Pinhole angeordnet, wobei dieses identisch mit dem DetektionsPinhole ist. In vorteilhafter Weise wird dabei die Eigenschaft des Kristalls, den Lichtstrahl der 0. Ordnung durch den Prismeneffekt spektral aufzufächern, zur Detektion genutzt. Das dispersive Element des Multibanddetektors ist dabei mit dem Farbstrahlteiler zu einem Bauteil vereinigt, wodurch alle weiteren, dem herkömmlichen Detektionsstrahlengang nachgeordneten und mit weiteren Verlusten in der Fluoreszenzintensität behafteten Farbstrahlteiler entfallen.

In ganz besonders vorteilhafter Weise kann die voranstehend erörterte Technik in Kombination mit einer in der Wellenlänge variabel durchstimmbaren Laserlichtquelle - z.B. Farbstofflaser, OPO (optisch parametrisierter Oszillator). Elektronenstrahlkollisionslichtquelle - äußerst flexible Fluoreszenzmikroskope-Anwendungen ermöglichen. Die Einstellung bzw. Kontrolle der Anregungswellenlänge kann direkt mit der Ansteuereinheit eines der zuvor beschriebenen spektral selektiven Elemente gekoppelt sein, so daß nur diese Anregungswellenlänge koaxial in den Anregungsstrahlengang des Mikroskops eingekoppelt und wiederum nur diese Wellenlänge aus dem Detektionsstrahlengang ausgeblendet wird. Die Kopplung bzw. Zwangskopplung der Lichtquelle mit dem strahlteilenden Element kann entweder manuell oder automatisch oder gar nach einer vorgebbaren Vorschrift erfolgen wobei diese Möglichkeit dem jeweiligen Anforderungsprofil anzupassen ist. Beispielsweise kann nach jeder gescannten Bildebene die Anregungswellenlänge sowie der Strahlteiler in geeigneter Weise verändert werden. Somit lassen sich Mehrfarbenfluoreszenzobjekte detektieren. Eine zeilenweise Umschaltung ist ebenso denkbar.

Zusammenfassend lassen sich die Vorteile der erfindungsgemäßen Lehre nebst vorteilhafter Ausgestaltung wie folgt zusammenfassen:

Die spektral selektiven Elemente sind für alle Wellenlängen außer für die selektierten Anregungswellenlängen $\lambda_{ill1}$, $\lambda_{ill2}$, ... $\lambda_{illn}$ "transparent". Der "spektrale Verlust" ist minimal, da vom spektral selektiven Element nur der selektierte spektrale Bereich von typischerweise $A_{illn}$ ± 2 nm abgelenkt wird. Dadurch wird der spektrale Bereich für die Detektion vergrößert. Somit können nahezu beliebig viele unterschiedliche Wellenlängenbereiche simultan eingekoppelt und genutzt werden. Die spektral "verlorene Fluoreszenzintensität", die durch die spektral selektiven Elemente bedingt ist, ist geringer als bei herkömmlichen Farbstrahlteilern. Mit anderen Worten liegen hier reduzierte Intensitätsverluste im interessierenden Bereich vor. Die aktiven spektral selektiven Elemente sind flexibel einstellbar, so daß prinzipiell beliebig viele Lichtquellen bzw. Laser mit unterschiedlichen Wellenlängen auch simultan in das Mikroskop einkoppelbar sind. Dies ermöglicht die verbesserte

Anwendung bei Multi-Color FISH (Fluoreszenz-in-situ-Hybridisierung). Folglich ist dann nur noch eine Limitierung der spektralen Aufspaltung des Fluoreszenzlichts, bspw. durch "Cross-Talk", gegeben. Herkömmliche Sperrfilter können komplett entfallen, so daß weitere Verluste von Fluoreszenzlicht in der Detektion vermieden sind.

Schließlich ist es auch denkbar, daß ein anderes aktives holographisches Element dem spektral selektiven Element nachgeschaltet ist und dabei die Aufgabe des Strahlscanners ausübt. Beide Elemente können zu einem einzigen Bauteil zusammengefaßt sein.

Grundsätzlich lassen sich unterschiedliche Lichtquellen verwenden, solange sie zur Fluoreszenzanregung geeignet sind. So kommt bspw. eine Weißlichtquelle, eine Lichtquelle zur Verwendung eines optisch parametrisierten Oszillators, eine Elektronenstrahlkollisionslichtquelle oder eine Laserlichtquelle in Frage, wobei die Laserlichtquelle in der Wellenlänge variabel durchstimmbar sein kann. Laserlichtquellen mit verschiedenen Wellenlängen oder eine mehrere Laser umfassende Lichtquelle ist bzw. sind verwendbar.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 2 nachgeordneten Patentansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen:

Fig. 1 in einer schematischen Darstellung eine gattungsbildende optische Anordnung im Strahlengang eines konfokalen Laser-Scanning-Mikroskops zur Dokumentation des der Erfindung zugrundeliegenden Standes der Technik,

Fig. 2 in einer schematischen Darstellung ein erstes Ausführungsbeispiel,

Fig. 3 in einer schematischen Darstellung ein zweites Ausführungsbeispiel eines konfokalen Laser-Scanning-Mikroskops, wobei dort drei Laser mit unterschiedlichen Anregungswellenlängen einkoppelbar sind,

Fig. 4 in einer schematischen Darstellung ein Beispiel, das nicht zu der Erfindung gehört eines konfokalen Laser-Scanning-Mikroskops, wobei dort die Einkopplung von drei Laserlichtquellen über ein transparentes Gitter erfolgt,

Fig. 5 in schematischer Darstellung, vergrößert und teilweise, den Beleuchtungsstrahlengang und Detektionsstrahlengang, wobei dem aktiven spektral selektiven Element zur Strahlzusammenführung dienende Mittel nachgeschaltet sind,

Fig. 6 in schematischer Darstellung, vergrößert und teilweise, den Beleuchtungsstrahlengang und Detektionsstrahlengang, wobei dort eine Dispersionskorrektur erfolgt,

Fig. 7 in einer schematischen Darstellung die prinzipielle Funktionsweise eines AOD oder AOTF,

Fig. 8 in einer schematischen Darstellung ein weiteres Ausführungsbeispiel einer erfindungsgemäßen optischen Anordnung, wobei dort eine zusätzliche spektrale Auffächerung vor einem Multibanddetektor stattfindet und

Fig. 9 in einer schematischen Darstellung das Ausführungsbeispiel aus Fig. 8, wobei dort im Detektionsstrahlengang vor dem Multibanddetektor ein variables Spaltfilter angeordnet ist.

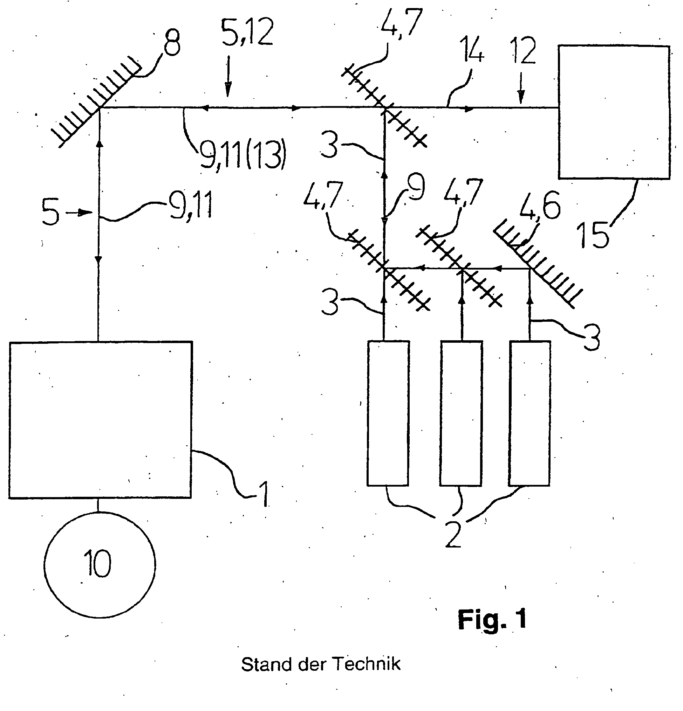

Fig. 1 dokumentiert den Stand der Technik und zeigt dabei eine herkömmliche optische Anordnung im Strahlengang einer zur Fluoreszenzanregung geeigneten Lichtquelle, wobei es sich hier um eine optische Anordnung im Strahlengang eines konfokalen Laser-Scanning-Mikroskops handelt. Der Laserscanner 1 ist dabei lediglich symbolisch dargestellt. Bei der den Stand der Technik betreffenden Darstellung sind als Lichtquellen insgesamt drei Laser 2 vorgesehen, die mit ihrem Anregungslicht 3 über spektral selektive Elemente 4 in den Beleuchtungsstrahlengang 5 des Mikroskops einkoppeln. Bei den spektral selektiven Elementen 4 handelt es sich im Konkreten um einen Spiegel 6 sowie um Farbstrahlteiler 7. Jedenfalls wird das Anregungslicht 3 in den Beleuchtungsstrahlengang 5 eingekoppelt und gelangt über einen weiteren Spiegel 8 als Anregungslicht 9 zum Laserscanner 1.

Das von dem ebenfalls lediglich symbolisch dargestellten Objekt 10 zurückkommende Licht - hier handelt es sich um das am Objekt gestreute und reflektierte Anregungslicht 9 einerseits und um das vom Objekt 10 ausgesandte Fluoreszenzlicht 11 - gelangt über den Spiegel 8 zu dem spektral selektiven Element 4, wobei es sich hier um den Farbstrahlteiler 7 handelt. Von dort aus wird das Anregungslicht 9 bzw. die Anregungswellenlänge aus dem über den Detektionsstrahlengang 12 vom Objekt 10 kommenden Licht 13 ausgeblendet und gelangt als zurückkommendes Anregungslicht 9 zurück zu den Lasern 2. Das durch den Farbstrahlteiler 7 nicht abgelenkte Detektionslicht 14 gelangt unmittelbar zu dem Detektor 15.

Erfindungsgemäß ist durch das spektral selektive Element 4 zurückkommendes Anregungslicht 3 unterschiedlicher Wellenlängen ausblendbar. Dies ist ins-

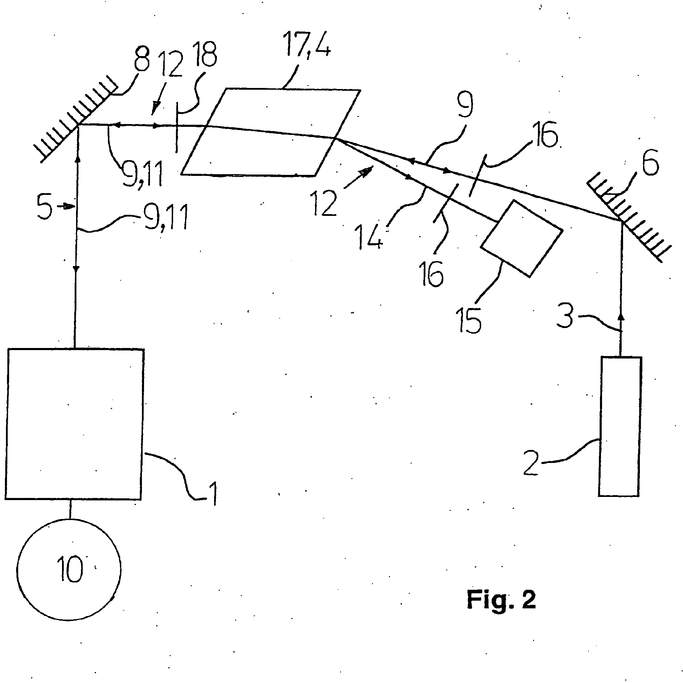

Das spektral selektive Element 4 ist auf die auszublendende Anregungswellenlänge einstellbar. Dies läßt sich den Ausführungsbeispielen aus den Fig. 2, 3 und 8, 9 besonders gut entnehmen.

Bei dem in Fig. 2 gezeigten Ausführungsbeispiel ist lediglich ein Laser 2 vorgesehen, dessen Anregungslicht 3 unterschiedliche Wellenlängen aufweisen kann. Jedenfalls gelangt das Anregungslicht 3 über einen Spiegel 6 und über ein zusätzliches optisches Element, nämlich über eine Linse 16 zu einem AOTF 17, der als spektralselektives Element arbeitet. Von dort aus gelangt das Anregungslicht 3 wiederum über ein zusätzliches optisches Element - im hier gewählten Ausführungsbeispiel eine Linse 18 - und über einen Spiegel 8 zum Laserscanner 1. Vom Objekt 10 reflektiert, gelangt das zurückkommende Lichtreflektiertes Anregungslicht 9 und Detektionslicht 11 - über den Spiegel 8 und die Linse 18 zurück in den AOTF 17 und wird dort entsprechend der Beschaltung des AOTF 17 teilweise ausgeblendet. Im Konkreten wird nämlich das Detektionslicht bzw. Fluoreszenzlicht 11 über den Detektionsstrahlengang 12 zum Detektor 15 geführt (0. Ordnung). Das zurückkommende Anregungslicht 9 wird dagegen über die Linse 16 und den Spiegel 6 zurück zum Laser 2 geführt und ist somit aus dem Detektionsstrahlengang 12 ausgeblendet.

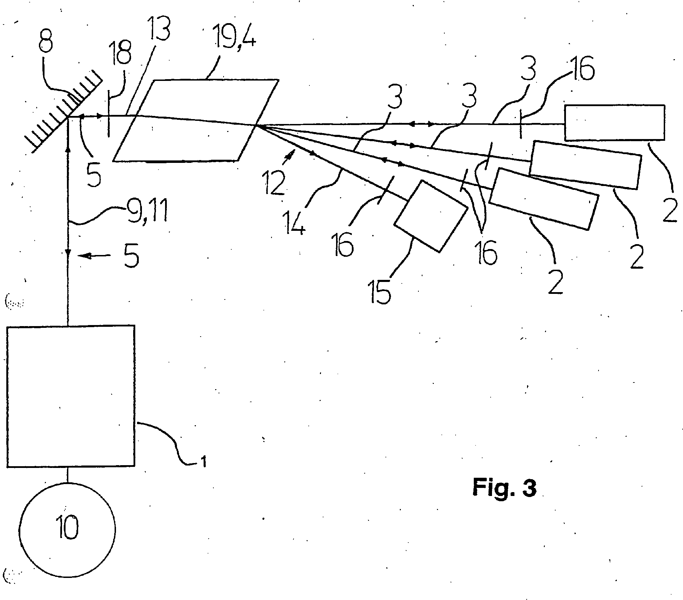

Ähnlich verhält es sich bei dem in Fig. 3 gezeigten Ausführungsbeispiel, wobei dort gleichzeitig drei Laser 2 über zusätzliche optische Elemente, hier Linsen 16, ihr Anregungslicht 3 über ein AOD 19, eine weitere nachgeschaltete Linse 18 und einen Spiegel 8 in den Beleuchtungsstrahlengang 5 einkoppeln. Von dort aus gelangt das Anregungslicht 3 zum Laserscanner 1 und zum Objekt 10.

Das vom Objekt kommende Licht 13 umfaßt bei dem voranstehend genannten Ausführungsbeispiel Fluoreszenzlicht 11 und zurückkommendes Anregungslicht 9, wobei dort der AOD 19 das zurückkommende Fluoreszenzlicht als Detektionslicht 14 zu dem Detektor 15 führt. Das zurückkommende Anregungslicht 9 wird ausgeblendet und gelangt über Linsen 16 zu den jeweiligen Lasern 2.

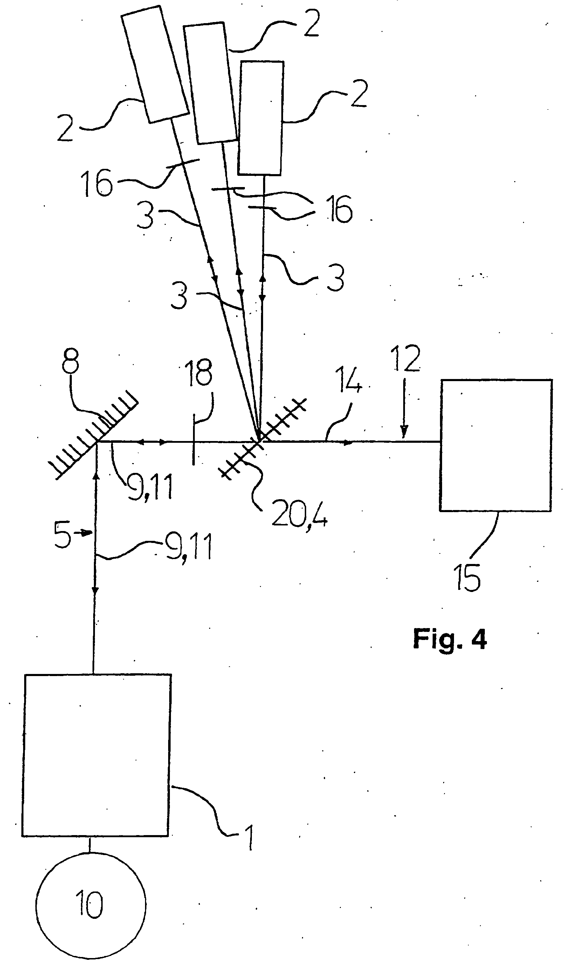

Das in Fig. 4 gezeigte Beispiel, das nicht zu der Erfindung gehört, umfaßt als spektral selektives Element 4 ein transparentes Gitter 20, wobei über das transparente Gitter 20 gleichzeitig drei Laser 2 ihr Anregungslicht 3 in den Beleuchtungsstrahlengang 5 des Mikroskops einkoppeln. Wesentlich ist hier jedenfalls, daß das transparente Gitter 20 das vom Objekt 10 zurückkommende Anregungslicht 9 aus dem Detektionsstrahlengang ausblendet, so daß dieses Licht zurück zu den Lasern 2 gelangt. Das zu detektierende Fluoreszenzlicht 11 gelangt über den Detektionsstrahlengang 12 zum Detektor 15.

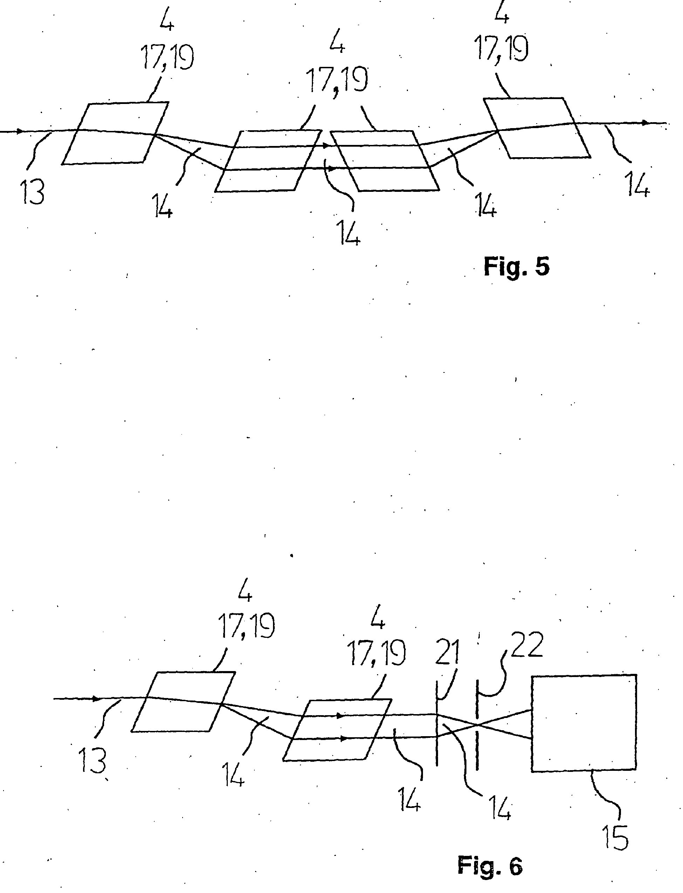

Fig. 5 zeigt die Möglichkeit einer Dispersionskorrektur, wobei das vom Objekt zurückkommende Licht 13 in den AOTF 17 oder AOD 19 gelangt. Dort wird das zurückkommende Detektionslicht 14 - zwangsweise - spektral aufgefächert und über nachgeschaltete Elemente - AOD/AOTF - parallelisiert und schließlich konvergiert. Das spektral vereinigte Detektionslicht 14 gelangt von dort zu dem in Fig. 5 nicht gezeigten Detektor 15.

Bei der in Fig. 6 gezeigten Dispersionskorrektur wird das vom Objekt kommende Licht 13 mittels AOD 17/ AOTF 19 aufgefächert, wobei das aufgefächerte Detektionslicht 14 über ein weiteres passives spektral selektives Element 4-AOTF 17 oder AOD 19 - über eine Linse 21 mit Feldkorrektur konvertiert und durch ein Detektionspinhole 22 oder durch einen Detektionsspalt zum Detektor 15 gelangt.

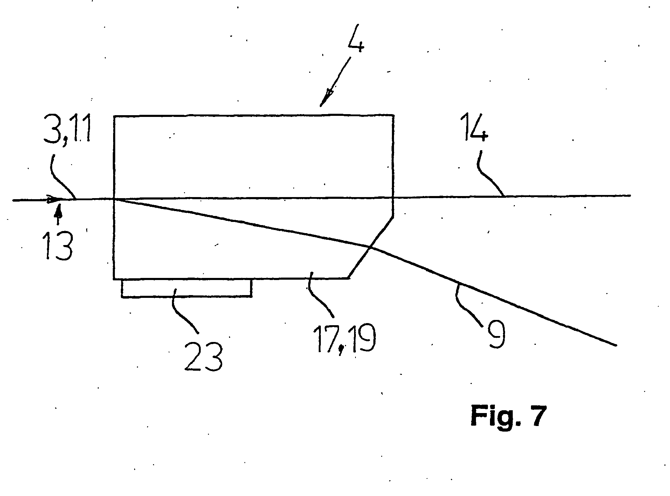

Gemäß der Darstellung in Fig. 7 handelt es sich bei dem spektral selektiven Element 4 um ein AOTF 17 oder ein AOD 19, wobei diese Elemente einen speziellen Kristall mit dispersionsfreier 0. Ordnung umfassen. Dieser Kristall bzw. dieses spektral selektive Element wird über ein Piezoelement 23 angeregt bzw. beaufschlagt. Fig. 7 zeigt besonders deutlich, daß das vom Objekt kommende Licht 13 in dem AOTF 17 bzw. AOD 19 aufgespalten wird, wobei das Detektionslicht 14 als dispersionsfreies Licht 0. Ordnung ungehindert durch den Kristall läuft. Das vom Objekt zurückkommende Anregungslicht 9 wird dagegen als Licht 1. Ordnung abgelenkt und zurück zu den hier nicht gezeigten Lasern geführt.

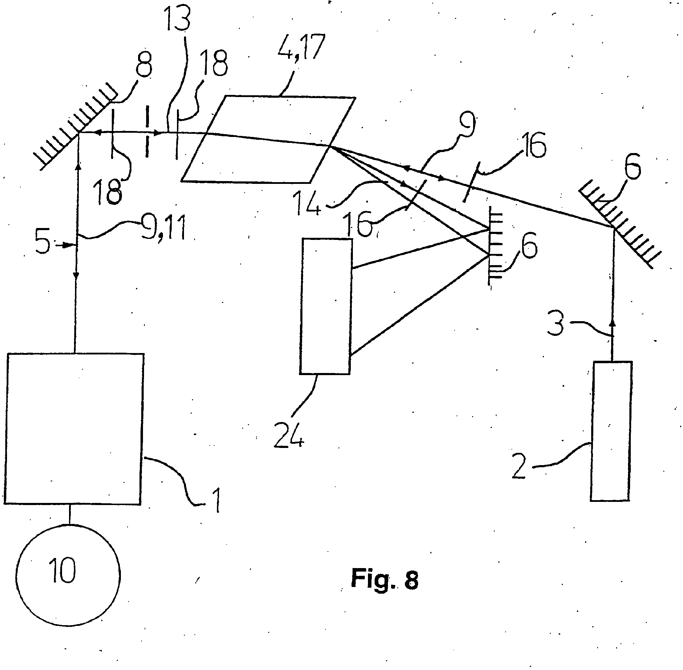

Fig. 8 zeigt eine spezielle Detektion unter Ausnutzung der spektralen Auffächerung des spektral selektiven Elements 4, wobei hier im Konkreten ein AOTF 17 verwendet ist. Das vom Objekt 10 kommende Licht 13 wird im AOTF 17 spektral aufgespalten, wobei das Detektionslicht 14 über eine Linse 16 und einen Spiegel 6 zu einem Multibanddetektor 24 bzw. Spektrometer gelangt. Der Spiegel 6 führt zu einer Verlängerung der Strecke, so daß eine Auffächerung des zurückkommenden Detektionslichts 14 bis hin zum Multibanddetektor 24 begünstigt wird.

Das im AOTF 17 ausgeblendete Anregungslicht 9 gelangt über die Linse 16 und den Spiegel 8 zurück zum Laser 2.

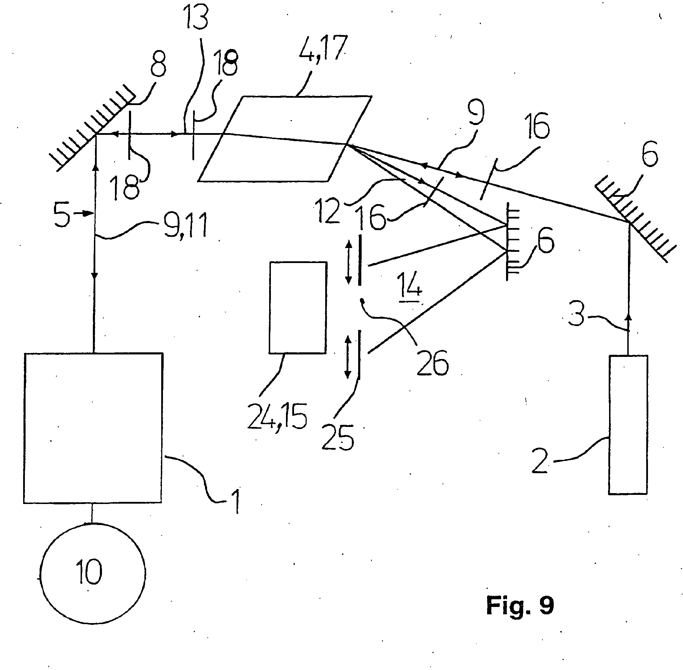

Schließlich zeigt Fig. 9 in einer schematischen Darstellung das Ausführungsbeispiel aus Fig. 8, wobei dort - in Ergänzung - im Detektionsstrahlengang vor dem Multibanddetektor 24 ein variables Spaltfilter 25 angeordnet ist. Dieses Spaltfilter 25 ist im Detektionsstrahlengang 12 unmittelbar vor dem Detektor 15 angeordnet und im Detektionsstrahlengang positionierbar. Desweiteren ist der Spalt 26 des Spaltfilters 25 variabel, so daß auch insoweit eine spektrale Selektion des Detektionslichts 14 möglich ist.

**Besugszeichenliste**

| | |
|---|---|
| 1 | Laserscanner |
| 2 | Laser (Lichtquelle) |
| 3 | Anregungslicht |
| 4 | spektral selektives Element |
| 5 | Beleuchtungsstrahlengang |

6    Spiegel
7    Farbstrahlteiler
8    Spiegel
9    Anregungs- und Detektionslicht
10   Objekt
11   Fluoreszenzlicht (Detektionslicht)
12   Detektionsstrahlengang
13   (vom Objekt kommendes) Licht
14   Detektionslicht (nicht abgelenktes Detektionslicht)
15   Detektor
16   Linse
17   AOTF
18   Linse
19   AOD
20   transparentes Gitter
21   Linse (mit Feldkorrektur)
22   Detektions-Pinhole
23   Piezoelement
24   Multibanddetektor (Spektrometer)
25   (variables) Spaltfilter
26   Spalt (von 25)

**Patentansprüche**

1. Konfokales Laser-Scanning-Mikroskop mit einer optischen Anordnung, die im Strahlengang einer zur Fluoreszenzanregung geeigneten Lichtquelle_und im Strahlengang des konfokalen Laser-Scanning-Mikroskops angeordnet ist, wobei die optische Anordnung_mindestens ein spektral selektives Element (4) zum Einkoppeln des Anregungslichts (3) mindestens einer Lichtquelle (2) in das Mikroskop und zum Ausblenden des am Objekt (10) gestreuten und reflektierten Anregungslichts (3) bzw. der Anregungswellenlänge aus dem über den Detektionsstrahlengang (12) vom Objekt (10) kommenden Licht (13) aufweist, **dadurch gekennzeichnet, daß** das spektral selektive Element (4) auf die auszublendende Anregungswellenlänge einstellbar ist und es sich bei dem spektral selektiven Element (4) um ein aktives Bauteil handelt.

2. Konfokales Laser-Scanning-Mikroskop nach Anspruch 1, **dadurch gekennzeichnet,** daßdurchdasspektral selektive Element (4) Anregungslicht (3, 9) unterschiedlicher Wellenlängen ausblendbar ist.

3. Konfokales Laser-Scanning-Mikroskop nach Anspruch 1a, **dadurch gekennzeichnet, daß** das spektral selektive Element (4) akustooptisch und/oder elektrooptisch arbeitet, oder daß das spektral selektive Element (4) als AOD (Acousto-Optical-Deflector) (19) ausgeführt ist, oder daß das spektral selektive Element (4) als AOTF (Acousto-Optical-Tunable-Filter) (17) ausgeführt ist.

4. Konfokales Laser-Scanning-Mikroskop nach Anspruch 3, wobei eine Lichtquelle mit unterschiedlichen Wellenlängen einkoppelbar ist, **dadurch gekennzeichnet, daß** das AOTF (17) mit entsprechenden Frequenzen simultan beschaltbar ist.

5. Konfokales Laser-Scanning-Mikroskop nach einem der Ansprüche 1 bis 4, **dadurch gekennzeichnet, daß** zur leistungsspezifischen Regelung einzelner Wellenlängen dem spektral selektiven Element (4) mindestens ein weiteres aktives bzw. spektral selektives Element nachgeschaltet ist.

6. Konfokales Laser-Scanning-Mikroskop nach Anspruch 5, **dadurch kennzeichnet, daß** es sich bei dem weiteren spektral selektiven Element um ein AOD (19), oder um ein AOTF (17) handelt.

7. Konfokales Laser-Scanning-Mikroskop nach einem der Ansprüche 1 bis 6, **dadurch gekennzeichnet, daß** die Ansteuerung der Lichtquelle (2) mit dem spektral selektiven Element (4) manuell oder automatisch erfolgt, oder nach einer frei definierbaren Vorschrift erfolgt.

8. Konfokales Laser-Scanning-Mikroskop nach einem der Ansprüche 1 bis 7, **dadurch gekennzeichnet, daß** dem spektral selektiven Element (4) mindestens ein weiteres optisches Element vor- und/oder nachgeschaltet ist.

9. Konfokales Laser-Scanning-Mikroskop nach Anspruch 8, **dadurch gekennzeichnet, daß** als weiteres optisches Element ein Farbstrahlteiler zur weiteren spektralen Zerlegung vorgesehen ist.

10. Konfokales Laser-Scanning-Mikroskop nach einem der Ansprüche 1 bis 9, **dadurch gekennzeichnet, daß** im Detektionsstrahlengang (12) Mittel zur Mehrfachreflexion angeordnet sind, die eine Winkelvergrößerung der Auffächerung des Detektionsstrahls herbeiführen.

11. Konfokales Laser-Scanning-Mikroskop nach einem der Ansprüche 1 bis 10, **dadurch gekennzeichnet, daß** im Detektionsstrahlengang (12), vorzugsweise unmittelbar vor dem Detektor (15), ein Spaltfilter (25) angeordnet ist.

12. Konfokales Laser-Scanning-Mikroskop nach einem der Ansprüche 1 bis 11, **dadurch gekennzeichnet, daß** im Detektionsstrahlengang (12) nach dem spektral selektiven Element (4) ein Spektrometer zur Detektion der spektralen Auffächerung angeordnet ist.

13. Konfokales Laser-Scanning-Mikroskop nach einem der Ansprüche 1 bis 12, **dadurch gekennzeichnet, daß** die ausgeblendeten Anregungswellenlängen in Richtung der Lichtquellen (2) aus dem Detektionsstrahlengang (12) abgelenkt werden.

14. Konfokales Laser-Scanning-Mikroskop nach einem der Ansprüche 1 bis 13, **dadurch gekennzeichnet, daß** die Lichtquelle (2) als Weißlichtquelle ausgeführt ist, oder daß die Lichtquelle (2) als optisch parametrisierter Oszillator (OPO) ausgeführt ist, oder daß die Lichtquelle (2) als Elektronenstrahlkollisionslichtquelle ausgeführt ist, oder daß die Lichtquelle (2) als Laserlichtquelle ausgeführt ist.

15. Konfokales Laser-Scanning-Mikroskop nach Anspruch 14, **dadurch gekennzeichnet, daß** die Laserlichtquelle in der Wellenlänge variabel durchstimmbar ist.

16. Konfokales Laser-Scanning-Mikroskop nach Anspruch 15, **dadurch gekennzeichnet, daß** die Laserlichtquelle einen Laser mit verschiedenen Wellenlängen umfaßt.

17. Konfokales Laser-Scanning-Mikroskop nach einem der Ansprüche 1 bis 16, **dadurch gekennzeichnet, daß** das spektral selektive Element (4) derart konstruiert ist, daß eine spektrate Auffächerung des Detektionstichts (11) zumindest weitgehend vermieden ist.

**Claims**

1. Confocal laser scanning microscope having an optical arrangement which is arranged in the beam path of a light source suitable for exciting fluorescence and in the beam path of the confocal laser scanning microscope, the optical arrangement having at least one spectrally selective element (4) for coupling the excitation light (3) from at least one light source (2) into the microscope and for blanking out the excitation light (3) scattered and reflected on the object (10) and the excitation wavelength from the light (13) coming from the object (10) via the detection beam path (12), **characterized in that** the spectrally selective element (4) can be adjusted to the excitation wavelength to be blanked out, and the spectrally selective element (4) is an active component.

2. Confocal laser scanning microscope according to Claim 1, **characterized in that** excitation light (3, 9) of different wavelengths can be blanked out by the spectrally selective element (4).

3. Confocal laser scanning microscope according to Claim 1, **characterized in that** the spectrally selective element (4) operates acousto-optically and/or electro-optically, or **in that** the spectrally selective element (4) is implemented as an AOD (acousto-optical deflector) (19), or **in that** the spectrally selective element (4) is implemented as an AOTF (acousto-optical tunable filter) (17).

4. Confocal laser scanning microscope according to Claim 3, it being possible for a light source having different wavelengths to be coupled in, **characterized in that** the AOTF (17) can be connected in simultaneously with appropriate frequencies.

5. Confocal laser scanning microscope according to one of Claims 1 to 4, **characterized in that** for the purpose of output-specific control of individual wavelengths, at least one further active and spectrally selective element is connected downstream of the spectrally selective element (4).

6. Confocal laser scanning microscope according to Claim 5, **characterized in that** the further spectrally selective element is an AOD (19) or an AOTF (17).

7. Confocal laser scanning microscope according to one of Claims 1 to 6, **characterized in that** activation of the light source (2) having the spectrally selective element (4) is carried out manually or automatically or is carried out in accordance with a freely definable rule.

8. Confocal laser scanning microscope according to one of Claims 1 to 7, **characterized in that** at least one further optical element is connected upstream and/or downstream of the spectrally selective element (4).

9. Confocal laser scanning microscope according to Claim 8, **characterized in that** the further optical element provided is a colour beam splitter for further spectral decomposition.

10. Confocal laser scanning microscope according to one of Claims 1 to 9, **characterized in that** means for multiple reflection, which bring about an enlargement of the angle of the divergence of the detection beam, are arranged in the detection beam path (12).

11. Confocal laser scanning microscope according to one of Claims 1 to 10, **characterized in that** a gap filter (25) is arranged in the detection beam path (12), preferably immediately upstream of the detector (15).

12. Confocal laser scanning microscope according to one of Claims 1 to 11, **characterized in that** a spectrometer for the detection of the spectral divergence is arranged in the detection beam path (12), downstream of the spectrally selective element (4).

13. Confocal laser scanning microscope according to one of Claims 1 to 12, **characterized in that** the excitation wavelengths that are blanked out are deflected out of the detection beam path (12) in the direction of the light sources (2).

14. Confocal laser scanning microscope according to one of Claims 1 to 13, **characterized in that** the light source (2) is implemented as a white light source, or **in that** the light source (2) is implemented as an optically configurable oscillator (OPO), or **in that** the light source (2) is implemented as an electron beam collision light source, or **in that** the light source (2) is implemented as a laser light source.

15. Confocal laser scanning microscope according to Claim 14, **characterized in that** the wavelength of the laser light source can be tuned variably.

16. Confocal laser scanning microscope according to Claim 15, **characterized in that** the laser light source comprises a laser with various wavelengths.

17. Confocal laser scanning microscope according to one of Claims 1 to 16, **characterized in that** the spectrally selective element (4) is constructed in such a way that spectral divergence of the detection light (11) is avoided, at least to a large extent.

## Revendications

1. Microscope à balayage à laser confocal comportant un dispositif optique qui est disposé sur le chemin de faisceau d'une source lumineuse appropriée pour la stimulation de la fluorescence, et est disposée sur le chemin de faisceau du microscope à balayage à laser confocal, dans lequel le dispositif optique comprend au moins un élément spectralement sélectif (4) destiné à injecter la lumière de stimulation (3) d'au moins une source lumineuse (2) dans le microscope et à éliminer la lumière de stimulation (3) diffusée et réfléchie sur un objet (10) ou la longueur d'onde de stimulation de la lumière (13) provenant de l'objet (10) par l'intermédiaire du chemin du faisceau de détection (12), **caractérisé en ce que** l'élément spectralement sélectif (4) peut être réglé sur la longueur d'onde de stimulation devant être éliminée et **en ce que** l'élément spectralement sélectif (4) est un composant actif.

2. Microscope à balayage à laser confocal selon la revendication 1, **caractérisé en ce qu'**une lumière de stimulation (3, 9) ayant des longueurs d'onde différentes peut être éliminée par l'élément spectralement sélectif (4).

3. Microscope à balayage à laser confocal selon la revendication 1, **caractérisé en ce que** l'élément spectralement sélectif (4) fonctionne de manière acousto-optique et/ou électro-optique, ou **en ce que** l'élément spectralement sélectif (4) est réalisé sous la forme d'un AOD (Acousto-Optical Deflector, déflecteur acousto-optique) (19), ou **en ce que** l'élément spectralement sélectif (4) est réalisé sous la forme d'un AOTF (Acousto-Optical-Tunable-Filter, pour filtre acousto-optique accordable) (17).

4. Microscope à balayage à laser confocal selon la revendication 3, dans lequel une source de lumière ayant des longueurs d'onde différentes peut être injectée, **caractérisé en ce que** l'AOTF (17) peut simultanément être câblé avec des fréquences correspondantes.

5. Microscope à balayage à laser confocal selon l'une quelconque des revendications 1 à 4, **caractérisé en ce que**, pour une régulation spécifique de la puissance de longueurs d'ondes individuelles, au moins un autre élément actif ou spectralement sélectif est connecté en aval de l'élément spectralement sélectif (4).

6. Microscope à balayage à laser confocal selon la revendication 5, **caractérisé en ce que** l'autre élément spectralement sélectif est un AOD (19) ou un AOTF (17).

7. Microscope à balayage à laser confocal selon l'une quelconque des revendications 1 à 6, **caractérisé en ce que** la stimulation de la source lumineuse (2) par l'élément spectralement sélectif (4) s'effectue manuellement ou automatiquement ou conformément à une instruction pouvant être librement définie.

8. Microscope à balayage à laser confocal selon l'une quelconque des revendications 1 à 7, **caractérisé en ce qu'**au moins un autre élément optique est connecté en amont et/ou en aval de l'élément spectralement sélectif (4).

9. Microscope à balayage à laser confocal selon la revendication 8, **caractérisé en ce qu'**il est prévu en tant qu'autre élément optique un diviseur de faisceau coloré destiné à une décomposition spectrale supplémentaire.

10. Microscope à balayage à laser confocal selon l'une quelconque des revendications 1 à 9, **caractérisé en ce que** des moyens destinés à effectuer une réflexion multiple et qui produisent un grossissement angulaire de la dispersion du faisceau de détection sont disposés sur le chemin du faisceau de détection (12).

11. Microscope à balayage à laser confocal selon l'une quelconque des revendications 1 à 10, **caractérisé en ce qu'**un filtre séparateur (25) est disposé sur le chemin du faisceau de détection (12), de préférence immédiatement avant le détecteur (15).

**12.** Microscope à balayage à laser confocal selon l'une quelconque des revendications 1 à 11, **caractérisé en ce qu'**un spectromètre destiné à détecter la dispersion spectrale est disposé sur le chemin du faisceau de détection (12) après l'élément spectralement actif (4).

**13.** Microscope à balayage à laser confocal selon l'une quelconque des revendications 1 à 12, **caractérisé en ce que** les longueurs d'onde de stimulation éliminées sont déviées dans la direction des sources lumineuses (2) en dehors du chemin du faisceau de détection (12).

**14.** Microscope à balayage à laser confocal selon l'une quelconque des revendications 1 à 13, **caractérisé en ce que** la source lumineuse (2) est réalisée sous la forme d'une source de lumière blanche, ou **en ce que** la source lumineuse (2) est réalisée sous la forme d'un oscillateur paramétrique optique (OPO), ou **en ce que** la source lumineuse (2) est réalisée sous la forme d'une source lumineuse à collision de faisceaux d'électrons, ou **en ce que** la source lumineuse (2) est réalisée sous la forme d'une source de lumière laser.

**15.** Microscope à balayage à laser confocal selon la revendication 14, **caractérisé en ce que** la source lumineuse est accordable à des longueurs d'onde variables.

**16.** Microscope à balayage à laser confocal selon la revendication 15, **caractérisé en ce que** la source de lumière laser comprend un laser ayant des longueurs d'onde différentes.

**17.** Microscope à balayage à laser confocal selon l'une quelconque des revendications 1 à 16, **caractérisé en ce que** l'élément spectralement sélectif (4) est conçu de manière à ce qu'une dispersion spectrale de la lumière de détection (11) soit au moins évitée dans une large mesure.

**Fig. 1**

Stand der Technik

**Fig. 2**

**Fig. 3**

**Fig. 4**

**Fig. 5**

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19627568 A1
- US 4827125 A
- US 5410371 A
- US 5599717 A
- DE 4330347 A1
- US 5127730 A
- DE 4330347142